# EUROPÄISCHE PATENTSCHRIFT

(11) **EP 0 436 058 B1**
(45) Veröffentlichungstag und Bekanntmachung des Hinweises auf die Patenterteilung: **20.10.1993**
(21) Anmeldenummer: 90100198.2
(22) Anmeldetag: 05.01.1990
(51) Int. Cl.: B29C 43/22, B29C 59/04, E04F 13/08

(54) **Verfahren zur Herstellung von Noppenplatten aus Kunststoff und Noppenplatte**
Process for producing plastic sheets with protuberances and plastic sheet with protuberances
Procédé pour la fabrication de plaques en plastique avec des protubérances et plaque en plastique avec des protubérances

(43) Veröffentlichungstag der Anmeldung: 10.07.1991
(73) Patentinhaber: "agru" Alois Gruber Gesellschaft m.b.H., A-4540 Bad Hall (AT)
(72) Erfinder: Lueghamer, Albert, A-4540 Bad Hall (AT)
(74) Vertreter: Rupprecht, Klaus, Dipl.-Ing.

(56) Entgegenhaltungen:
- WO-A-87/06522
- US-A- 2 816 323
- US-A- 3 089 191
- US-A- 4 122 644

## Beschreibung

Die Erfindung bezieht sich auf ein Verfahren zum Herstellen von Kunststoffplatten, vorzugsweise aus thermoplastischem Kunststoff, die auf mindestens einer Seite mit hinterschnittenen, einstückig mit ihnen ausgebildeten Ansätzen versehen ist, wobei der Plattenrohling durch Extrudieren aus einer Schlitzdüse geformt und anschließend durch mindestens einen Walzenspalt geführt wird, dessen eine Walze mit den Ansätzen entsprechender Ausnehmungen versehen ist.

Noppenplatten aus Kunststoff finden insbesondere Anwendung im Betonbehälterbau, wenn es gilt, flüssigkeits- und auch gasdichte, chemikalienresistente Behälter zu erstellen. Die Kunststoffplatten bilden die Auskleidung solcher Behälter. Sie erbringen die Beständigkeit gegen die Chemikalien und Flüssigkeiten. Die mechanische Festigkeit der Gesamtkonstruktion wird im wesentlichen von der Betonkonstruktion erbracht. Schwierigkeiten bereitet in aller Regel die Verbindung der Kunststoffplatten mit der Betonkonstruktion, da die glatte Kunststoffplatte keine feste mechanische Verbindung mit dem Beton eingeht. Die Zuhilfenahme von Klebern führt zu keinen langfristig zufriedenstellenden Ergebnissen.

Aus diesem Grunde sind verschiedene Verankerungselemente mit Hinterschneidungen vorgeschlagen worden, die auf einer Seite der Kunststoffplatte angebracht und die bei der Herstellung des Behälters einbetoniert werden. Auf diese Weise wird die erwünschte feste Verbindung zwischen Kunststoffplatte und Betonunterkonstruktion zwar erreicht, die Anbringung der bekannten Verankerungselemente an den Kunststoffplatten ist jedoch vergleichsweise aufwendig, da sie nachträglich erfolgt und mehrere Arbeitsschritte benötigt.

So ist beispielsweise in der DE-OS 31 08 972 ein Verfahren beschrieben, bei dem getrennt hergestellte Ankernoppen gleichzeitig auf die Kunststoffplatte aufgesetzt und dort mittels Schweißen befestigt werden. Diese Art der Aufbringung von Ankernoppen ist bei der Vielzahl der anzubringenden Ankerelemente überaus zeitaufwendig oder man benötigt eine entsprechend aufwendige Vorrichtung. Darüber hinaus weisen diese Ankernoppen im Bereich ihres Fußes scharfkantige Übergänge in sich selbst und bezüglich der Kunststoffplatte auf, wodurch es zu Kerbspannungen mit den bekannten Überbeanspruchungen kommen kann.

Aus der FR-PS 11 02 294 ist ein Verfahren bekannt geworden, mit dem Auskleidungsplatten durch Extrudieren hergestellt werden. Bei der Extrusion werden auf einer Plattenseite, bedingt durch den Extrusionsvorgang, über die gesamte Plattenlänge Ankerleisten vorgesehen, die auch hinterschnitten sein können. Dieses Verfahren kann nur für relativ dicke Kunststoffplatten angewendet werden, um eine gleichmäßige Ausbildung der Ankerleisten zu gewährleisten. Letztere bewirken auch eine linienförmige Kraftableitung zwischen den Kunststoffplatten und dem Beton des Bauwerks. Hierdurch entsteht ein ungleichmäßiger Spannungsverlauf in der Platte, was deren Dauerstandfestigkeit entgegensteht.

Aus den Unterlagen der europäischen Patentanmeldung 294 507 ergibt sich ein Verfahren zum Extrudieren von Noppenplatten, bei dem die auf einem Kalander erzeugten Noppen der Kunststoffplatte jedoch noch durch ein Schneidgerät geführt werden müssen, um die Hinterschneidungen zu erzeugen, die später die Noppenplatte im Betonbehälter befestigen sollen. Die auf diese Weise hergestellten Noppenplatten vermögen wegen der nur relativ beschränkt möglichen Hinterschneidungen nicht sämtliche Bedarfsfälle abzudecken. Außerdem ist der zusätzliche Arbeitsgang des Anbringens der Hinterschneidungen kostensteigernd. Auch müssen besondere Vorkehrungen zur Abführung und zum Einsammeln der abgeschnittenen Kunststoffteile getroffen werden.

In der US-PS 3 089 191 ist ebenfalls ein Herstellungsverfahren von Noppenplatten mittels Extrudierens und Kalandrierens beschrieben. Bei den dort erzeugten hakenförmigen Ansätzen sind zwar an ihrem Fuße kegelförmige Verbindungsstücke zur Kunststoffplatte vorgesehen, um dort nachteilige Kerbspannungen zu vermeiden. Der Haken selbst weist indessen einen rechtwinklig zum Fußteil verlaufenden Ansatz auf mit der Folge, daß sich am Übergang vom Fußteil zum Ansatz wiederum starke Kerbspannungen mit der verstärkten Möglichkeit von Rißbildung bei Belastung einstellen. Darüber hinaus kommt es im eingebauten Zustand der vorbekannten Noppenplatte am Haken zu einer stark einseitigen Belastung, da die parallel zur Platte verlaufenden Ansätze der Haken generell in einer einzigen Richtung verlaufen und somit zu einer einseitigen Lastverteilung führen.

Die Aufgabe der vorliegenden Erfindung besteht somit darin, ein Verfahren der eingangs genannten Art zu schaffen, mit dem auf einem Kalander in einem einzigen Arbeitsgang eine Kunststoffplatte mit Elementen zur Verankerung im Beton hergestellt werden kann, welche Elemente vergleichsweise groß sind und hinreichende Hinterschneidungen aufweisen, um zu einer relativ gleichmäßigen Lastverteilung unter möglichst geringer Kerbspannungsbildung bei bestimmungsgemäßem Gebrauch zu gelangen, und so praktisch sämtliche vorkommenden Anwendungsfälle, bei denen Kunststoffplatten zum Auskleiden von Betonbehältern zum Einsatz kommen, abdecken zu können.

Diese Aufgabe ist gemäß der Erfindung dadurch gelöst, daß als Ausnehmungen jeweils mindestens zwei von einem Oberflächenbereich der Walze sich in das Walzeninnere verspreizende Teilausnehmungen für Flügelelemente vorgesehen werden, die sich mit gleichbleibendem oder geringer werdendem Querschnitt in die Walze erstrecken.

Es hat sich gezeigt, daß derartige Ansätze überraschenderweise ohne Beschädigung aus den Ausnehmungen der Walzen beim Ablauf der Kunststoffplatte herausgehoben bzw. herausgezogen werden können, obwohl dies wegen der vorhandenen Hinterschneidungen nicht zu erwarten war. Dies gilt insbesondere bei der erfindungsgemäßen Noppen oder Ansatzkonfiguration, wie sie unten noch näher erläutert wird.

Mit dem erfindungsgemäßen Verfahren erhält man eine Kunststoffplatte, an der auf einer Seite Ansätze als spätere Verankerungselemente im Beton einstückig vorgesehen sind. Form und Verteilung dieser Ansätze wird durch entsprechende Anordnung und Ausbildung der Ausnehmungen der entsprchenden Walze bestimmt.

Die Erfindung beinhaltet auch Lösungsvorschläge für die Noppenplatte als solche und die spezielle Ausbildung ihrer Ansätze.

Weitere Einzelheiten, Merkmale und Vorteile der Erfindung ergeben sich aus der folgenden Beschreibung, der schematischen Zeichnung sowie den Unteransprüchen. Es zeigen:
- Fig. 1: einen vertikalen Schnitt durch ein Walzengerüst mit vorgeschaltetem Extruder;
- Fig. 2: eine Teilansicht der Draufsicht der Abwicklung der Walze des Walzengerüstes, die mit den Ausnehmungen zur Erzeugung der Ansätze versehen ist;
- Fig. 3: eine Draufsicht auf eine erfindungsgemäße Kunststoffplatte, die nach dem erfindungsgemäßen Verfahren hergestellt ist;
- Fig. 4: eine Seitenansicht des Gegenstandes der Fig. 3 und
- Fig. 5: eine Seitenansicht des Ansatzes nach Fig. 4.

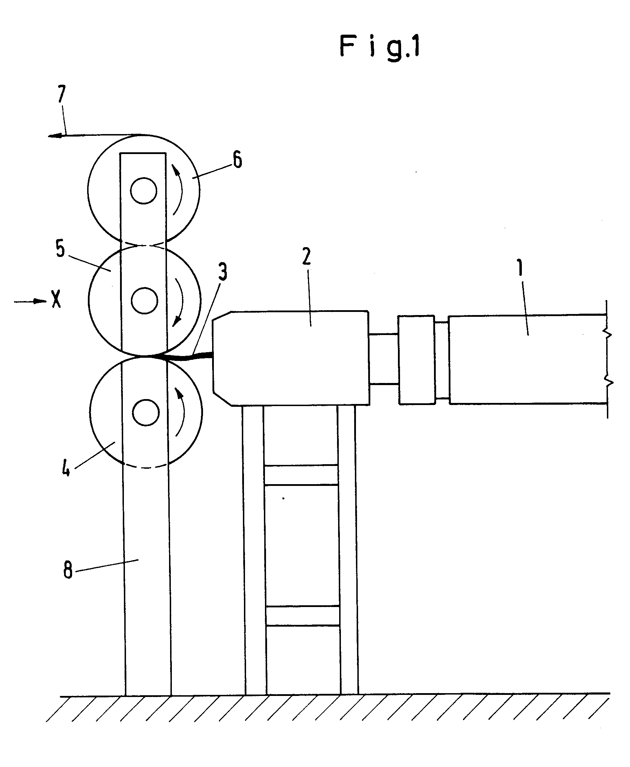

In der Fig. 1 ist der grundsätzlich bekannte Aufbau einer Anlage zur Herstellung von Kunststoffplatten schematisch gezeigt. Sie besteht aus einem Extruder mit einer vorgeschalteten Düse 2, die als Breitschlitzdüse ausgebildet ist, um auf diese Weise einen Plattenrohling 3 zu erzeugen. Dieser wird in den von zwei Walzen 4 und 5 gebildeten Spalt eingeführt und um die Walzen 5 und 6 herumgeführt. Bei der Walze 6 handelt es sich im wesentlichen um eine Glättwalze. Die an der Walze 5 grundsätzlich fertiggestellte erfindungsgemäße Kunststoffplatte mit Noppen oder Ansätzen wird dann an der Walze 6 abgeführt, wie dies schematisch durch einen Pfeil 7 angedeutet ist. Anschließend kann dann die bandförmige Kunststoffplatte in handelsübliche Maße unterteilt und zugeschnitten werden.

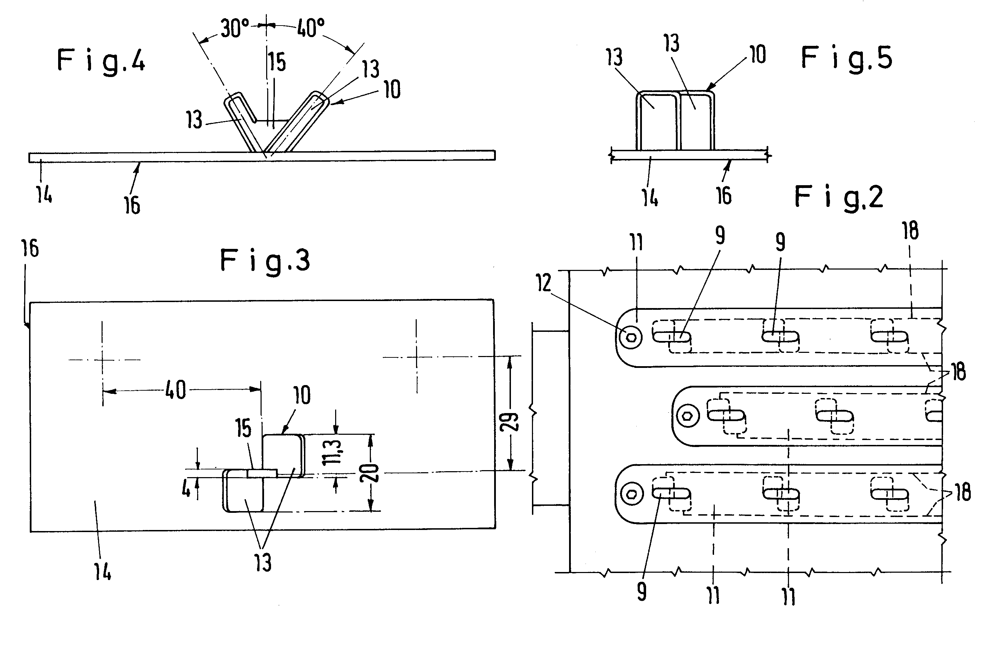

Zur Herstellung der erfindungsgemäßen, mit Ansätzen versehenen Kunststoffplatte ist die mittlere der drei gezeigten Walzen des Kalanders 8 über ihren Umfang verteilt mit speziellen Ausnehmungen versehen, wie dies in der Fig. 2 sowie indirekt in den Fig. 3 bis 5 näher gezeigt ist. Die Fig. 3 bis 5 zeigen Einzelheiten der Ansätze einer erfindungsgemäßen Noppenplatte. Die Ausnehmungen in der Walze 5 zur Herstellung dieser Ansätze entsprechen aber naturgemäß diesen Ansätzen.

Wie aus der Fig. 2 hervorgeht, sind Ausnehmungen 9 zur Erzeugung von Ansätzen 10 in Einsätzen 11 eingearbeitet, die ihrerseits in die Walze 5 unter Beibehaltung einer glatten Oberfläche eingelassen und dort mittels Schrauben 12 befestigt sind. Die inneren Enden der Ausnehmungungen 9 sind jeweils mit einer Entlüftungsleitung 18 verbunden, wodurch sichergestellt wird, daß beim Eindringen von Kunststoffmasse in die Ausnehmungen kein Gegendruck aufgebaut wird, und daß deshalb ein vollständiges Ausfüllen der Ausnehmungen mit der Kunststoffmasse gewährleistet ist. Die Entlüftungsleitungen 18 stehen mit der Atmosphäre in Verbindung. Sie können auch an Unterdruckleitungen angeschlossen sein. Die Anordnung der Ausnehmungen 9 in Einsätzen 11, die ihrerseits in korrespondierenden Ausnehmungen der Walze 5 vorgesehen sind, dient der kosteneffizienten Herstellung dieses Werkzeugs. Die technisch anspruchsvollen Ausnehmungen 11 sind leichter in den besser handhabbaren Einsätzen 11 herzustellen, als dies an der vergleichsweisen großen Walze 4 möglich wäre.

Im folgenden sei nunmehr auf die spezielle Ausgestaltung der erfindungsgemäßen Kunststoffplatte unter Bezugnahme auf die Fig. 3 bis 5 eingegangen. Die im folgenden zu der Konfiguration der Ansätze 10 zu machenden Ausführungen sind, wie oben bereits angesprochen, komplementär auf die Ausnehmungen 9 in den Einsätzen 11 der Walze 4 zu übertragen.

Die Fig. 3 bis 5 zeigen ein bevorzugtes Ausführungsbeispiel der erfindungsgemäßen Kunststoffplatte, wobei in Fig. 3 eine Einheit eines Ansatzes oder einer Noppe gezeigt ist, während zwei weitere identische Ansätze lediglich mittels zweier Symmetrielinien zeichnerisch angedeutet sind. Diese angedeuteten Ansätze sind identisch mit dem vollständig gezeichneten Ansatz oder der Ansatzeinheit 10 ausgeführt.

Wie aus den erwähnten Fig. 3 bis 5 ersichtlich, besteht ein Ansatz 10 aus zwei Flügeln oder Flügelelementen 13, die beim gezeichneten Ausführungsbeispiel nach Fig. 4 so zu einer Plattenbasis 14 angeordnet sind, daß ihre Hauptachsen bezüglich der Senkrechten zur Plattenbasis 14 einen Winkel von 30° bzw. 40° einschließen. Sämtliche Ansätze 10 sind in der gleichen Weise bezüglich der Plattenbasis 14 vorgesehen. Wie sich insbesondere aus der Draufsicht nach Fig. 3 und der Seitenansicht nach Fig. 4 ergibt, ist im Winkelraum von 70° zwischen den beiden Flügeln 13 ein Steg 15 angebracht. Er dient einer Fixierung der Stellung der beiden Flügel 13 zueinander, was insbesondere beim Entformungsvorgang der Ansatzeinheiten 10 aus den Ausnehmungen 9 von Vorteil ist, wo eine gewisse Kraft auf die Ansätze oder Ansatzeinheiten 10 ausgeübt werden muß, um sie aus den Ausnehmungen 9 herauszunehmen. Weiterhin ist dieser Steg 15 aber auch beim Einbetonieren der erfindungsgemäßen Kunststoffplatte von Bedeutung, wenn dort die Massenkräfte des noch nicht ausgehärteten Betons auf die Flügel 13 einwirken. Auch hierbei übernehmen die Stege 15 der Ansätze 13 eine Aussteifungsfunktion und gewährleisten so eine Beibehaltung der hinterschnittenen Gesamtform der Ansätze 10, um eine zuverlässige Verankerung der Ansätze und somit der gesamten Kunststoffplatte 16 in dem Betonteil zu gewährleisten.

Um eine Vorstellung der Größe der Ansätze 10 zu vermitteln, sind in Fig. 3 beispielsweise einige Maßangaben in mm angegeben. Es ergibt sich hierbei, daß die Breite der Flügel 13 etwa 11 mm beträgt, der Abstand der Ansätze zueinander - in Förderrichtung der Walzen - beträgt 40 mm, die seitliche Versetzung zweier Ansätze etwa 29 mm. Die Breite des Steges 15 liegt bei etwa 4 mm, die Gesamtbreite einer Ansatzeinheit 10, die aus zwei Flügeln gebildet ist, bei etwa 20 mm. Die seitliche Versetzung zweier Ansatzeinheiten 10 liegt bei 29 mm.

Fig. 3 zeigt auch, daß die seitliche Versetzung der Flügel 13 einer Ansatzeinheit 10 praktisch über ihre gesamte Breite von 11,3 mm abzüglich der Dicke des Steges erfolgt. Diese seitliche Versetzung kann jedoch auch geringer gewählt werden, doch ergibt sich bei der gezeigten Anordnung ein Optimum an Wirksamkeit der Ansatzeinheit 10 als Verankerungselement sowie an Entformbarkeit aus der Walze 5 des Kalanders 8. Weiterhin ist die Form der Flügel nicht auf die gezeigte flächige Ausführung beschränkt. Die einzelnen Flügel 13 können im Querschnitt gesehen vielmehr neben der gezeigten rechteckigen Form auch rund, oval sowie quadratisch ausgeführt werden.

Als Material für die Kunststoffplatte kommen Polyvinylchlorid, Polypropylen, Polyethylen, Polyvinylidenfluorid sowie E-CTFE in Frage.

Bei diesen Kunststoffen liegen die Arbeitstemperaturen der Walze 6 bei etwa 90°C, bei der mittleren Walze 5 etwa bei 60°C. Die Abzugsgeschwindigkeit der fertiggestellten Kunststoffplatte an der Walze 6 liegt bei etwa 10 bis 20 Metern pro Stunde, je nach Stärke der Platte. Diese relativ geringe Abzugsgeschwindigkeit ist erforderlich, damit die Plattenbasis 14 sowie die Ansätze 10 unter Beibehaltung ihrer beschriebenen Form und Anordnung zueinander entformt werden können.

Die Ausnehmungen 9 für die Flügel 13 mit dem Winkel von 30° bezüglich der Senkrechten durch die Plattenbasis 14 sind in diesem Zusammenhang gegenüber den Ausnehmungen 9 für die Flügel 13 mit dem Winkel von 40° so auf der Walze 4 angeordnet, daß die Flügel 13 mit dem Winkel von 30° gegenüber den Flügeln 13 mit 40° vorauseilen. Hierdurch ergibt sich eine einwandfreie Entformbarkeit der hinterschnittenen Ansätze 10 aus den Ausnehmungen 9. Bei den beschriebenen Arbeitstemperaturen und der Arbeitsgeschwindigkeit sind die Flügel 13 noch soweit elastoplastisch, daß die beim Entformen auf die Ansätze 10 auszuübenden Kräfte nicht mehr zu einer bleibenden Verformung der Ansätze 10 gegenüber dem beschriebenen Aufbau führt.

## Patentansprüche

1. Verfahren zum Herstellen von Kunststoffplatten, vorzugsweise aus thermoplastischem Kunststoff, die auf mindestens einer Seite mit hinterschnittenen, einstükkig mit ihnen ausgebildeten Ansätzen (10) versehen sind, wobei der Plattenrohling (3) durch Extrudieren aus einer Schlitzdüse geformt und anschließend durch mindestens einen Walzenspalt geführt wird, dessen eine Walze (5) mit den Ansätzen (10) entsprechenden Ausnehmungen (9) versehen ist, dadurch gekennzeichnet, daß als Ausnehmungen (9) jeweils mindestens zwei von einem Oberflächenbereich der Walze sich in das Walzeninnere verspreizende Teilausnehmungen für Flügelelemente (13) vorgesehen werden, die sich mit gleichbleibendem oder geringer werdendem Querschnitt in die Walze (5) erstrecken.

2. Verfahren nach Anspruch 1, dadurch gekennzeichnet, daß die Teilausnehmungen für die Flügelelemente (13) mit rechteckigem, quadratischem, rundem, elliptischem oder ovalem Querschnitt versehen werden.

3. Verfahren nach Anspruch 1 oder 2, dadurch gekennzeichnet, daß die Teilausnehmungen für das beim Herstellungsprozeß vorauseilende Flügelelement (13) der Ansätze (10) einen kleineren Winkel mit der Senkrechten durch den Fußpunkt der Ausnehmungen (9) in der Walzenoberfläche gemessen im Walzeninneren einschließen als das nacheilende Flügelelement (13).

4. Kunststoffplatte, insbesondere zum Auskleiden von Betonbauteilen, vorzugsweise aus thermoplastischem Kunststoff, die auf mindestens einer Seite mit hinterschnittenen einstückig mit ihr ausgebildeten Ansätzen (10) versehen ist, dadurch gekennzeichnet, daß die Ansätze (10) jeweils mindestens zwei sich verspreizende Flügelelemente (13) aufweisen, die über ihre Länge gleichen oder kleiner werdenden Querschnitt aufweisen.

5. Kunststoffplatte nach Anspruch 4, dadurch gekennzeichnet, daß jeweils ein Flügelelement (13) der Ansätze (10) einen kleineren Winkel mit der Senkrechten durch den Fußpunkt der Ansätze (10) einschließt als das zweite Flügelelement (13).

6. Kunststoffplatte nach Anspruch 4 oder 5, dadurch gekennzeichnet, daß die Flügelelemente (13) rechteckigen, quadratischen, runden, elliptischen oder ovalen Querschnitt aufweisen.

7. Kunststoffplatte nach mindestens einem der Ansprüche 4 bis 6, dadurch gekennzeichnet, daß die Flügelelemente (13) im Bereich ihres Fußpunktes mit einem sich etwa über die halbe Flügelelementenhöhe erstreckenden Abstandhalter (15) versehen sind.

8. Kunststoffplatte nach mindestens einem der Ansprüche 4 bis 7, dadurch gekennzeichnet, daß die Flügelelemente (13) bezüglich ihrer Breite versetzt zueinander angeordnet sind, wobei der Abstandhalter (15) mittig zum Ansatz (10) vorgesehen ist.

9. Kunststoffplatte nach mindestens einem der Ansprüche 4 bis 8, dadurch gekennzeichnet, daß das eine Flügelelement (13) der Ansätze (10) einen Winkel von etwa 30° und das andere Flügelelement (13) der Ansätze (10) einen Winkel von etwa 40° mit der Senkrechten durch den Fußpunkt des jeweiligen Ansatzes (10) einschließt.

## Claims

1. Process for producing plastic sheets, preferably from thermoplastic material, which are provided on at least one side with undercut attachments (10) formed in one piece with them, the sheet blank (3) being shaped by extruding from a slot die and subsequently being passed through at least one roll nip, the one roll (5) of which is provided with recesses (9) corresponding to the attachments (10), characterised in that, as recesses (9), in each case at least two partial recesses for fin elements (13) are provided, which partial recesses spread out from a surface region of the roll into the interior of the roll and extend into the roll (5) with constant or diminishing cross-section.

2. Process according to Claim 1, characterised in that the partial recesses for the fin elements (13) are provided with a rectangular, square, round, elliptical or oval cross-section.

3. Process according to Claim 1 or 2, characterised in that the partial recesses for the fin element (13) of the attachments (10) which is leading in the production process form a smaller angle with the perpendicular through the base point of the recesses (9) in the roll surface, measured in the interior of the roll, than the trailing fin element (13).

4. Plastic sheet, in particular for lining concrete structural elements, preferably of thermoplastic material, which is provided on at least one side with undercut attachments (10) formed in one piece with it, characterised in that the attachments (10) have in each case at least two spreading fin elements (13), which have the same or diminishing cross-section over their length.

5. Plastic sheet according to Claim 4, characterised in that in each case one fin element (13) of the attachments (10) forms a smaller angle with the perpendicular through the base point of the attachments (10) than the second fin element (13).

6. Plastic sheet according to Claim 4 or 5, characterised in that the fin elements (13) have a rectangular, square, round, elliptical or oval cross-section.

7. Plastic sheet according to at least one of Claims 4 to 6, characterised in that the fin elements (13) are provided in the region of their base point with a spacer (15), extending approximately over half the height of the fin elements.

8. Plastic sheet according to at least one of Claims 4 to 7, characterised in that the fin elements (13) are arranged offset from one another with respect to their width, the spacer (15) being provided centrally with respect to the attachment (10).

9. Plastic sheet according to at least one of Claims 4 to 8, characterised in that the one fin element (13) of the attachments (10) forms an angle of about 30° and the other fin element (13) of the attachments (10) forms an angle of about 40° with the perpendicular through the base point of the respective attachment (10).

## Revendications

1. Procédé de préparation de plaques en matière plastique, de préférence en matière thermoplastique, qui sont munies au moins sur une face d'appendices (10) en contre dépouille, formées d'une pièce avec la plaque, l'ébauche de plaque (3) est obtenue par extrusion à partir d'une buse en forme de fente et ensuite elle passe par au moins une emprise de cylindres, dont un cylindre (5) est muni d'évidements (9) correspondant aux appendices (10), caractérisé en ce que comme évidement (9) on prévoit toujours dans chaque cas deux évidements partiels pour éléments plans (13) s'écartant depuis une zone de la surface de cylindre dans l'intérieur du cylindre qui s'étendent avec une section constante ou qui va en diminuant dans le cylindre (5).

2. Procédé selon la revendication 1, caractérisé en ce que les évidements partiels pour les éléments plans (13) sont munis de sections rectangulaires, carrées, rondes, elliptiques ou ovales.

3. Procédé selon la revendication 1 ou 2, caractérisé en ce que les évidements partiels de l'élément plan (13) en aval lors du processus de fabrication des appendices (10) font un angle plus petit avec la verticale passant par le pied des évidements (9) à la surface du cylindre mesuré à l'intérieur du cylindre, que l'angle fait par l'élément plan en amont (13).

4. Plaque en matière plastique, notamment pour recouvrir des pièces constitutives en béton, qui est munie sur au moins une face d'appendices (10) en contre dépouille formées d'une pièce avec la plaque, caractérisée en ce que les appendices (10) présentent chaque fois au moins deux éléments plans (13) s'écartant, qui présentent une section constante sur leur longueur ou qui va en diminuant.

5. Plaque en matière plastique selon la revendication 4, caractérisée en ce que chaque fois un élément plan (13) des appendices (10) fait un angle plus petit avec la perpendiculaire qui passe par le pied des appendices (10) que le deuxième élément plan (13).

6. Plaque en matière plastique selon la revendication 4 ou 5, caractérisée en ce que les éléments plans (13) présentent une section rectangulaire, carrée, ronde, elliptique ou ovale.

7. Plaque en matière plastique selon au moins une des revendications 4 à 6, caractérisée en ce que les éléments plans (13) sont munis dans le domaine de leurs pieds d'un écarteur (15) qui s'étend approximativement à mi-hauteur des éléments plans.

8. Plaque en matière plastique selon au moins l'une des revendications 4 à 7, caractérisée en ce que les éléments plans (13) sont disposés en décalage l'un par rapport à l'autre vis-à-vis de leur largeur, l'écarteur (15) étant prévu au milieu de l' appendice (10).

9. Plaque en matière plastique selon au moins l'une des revendications 4 à 8, caractérisée en ce qu'un élément plan (13) des appendices (10) fait un angle d'environ 30° et l'autre élément plan (13) des appendices (10) fait un angle d'environ 40° avec la perpendiculaire au pied de chaque appendice (10).
